# EUROPEAN PATENT SPECIFICATION

(11) **EP 4 057 051 B1**
(45) Date of publication and mention of the grant of the patent: **09.10.2024**
(21) Application number: 21162089.3
(22) Date of filing: 11.03.2021
(51) Int. Cl.: G02C 5/14, G02C 11/00, A61H 3/06

(54) **TEMPLES OF GLASSES FOR THE BLIND OR VISUALLY IMPAIRED**
BRILLENBÜGEL FÜR BLINDE UND SEHBEHINDERTE
BRANCHES DE LUNETTES POUR AVEUGLES ET MALVOYANTS

(43) Date of publication of application: 14.09.2022
(73) Proprietor: Lighthouse Tech Sagl, 6834 Morbio Inferiore (CH)
(72) Inventor: BURLANDO, Franco, 6834 Morbio Inferiore (CH); BALDINI, Riccardo, 46044 Goito (MN) (IT); MORONI STAMPA, Andrea, 6964 Davesco - Lugano (CH); PIZZATTI CASACCIA, Emanuele, 6900 Lugano (CH)
(74) Representative: PGA S.p.A., Milano, Succursale di Lugano

(56) References cited:
- EP-A1- 2 921 928
- WO-A2-2013/173898
- CN-U- 209 137 266
- US-A1- 2005 036 103
- US-A1- 2020 271 960
- US-A1- 2020 271 961
- US-B1- 10 098 807

## Description

### Field of application

The present invention relates to a temple for glasses intended for the blind or visually impaired.

The invention also relates to glasses for the blind or visually impaired comprising the temple.

In particular, the invention relates to a temple and glasses of the aforementioned type, for detecting obstacles during the displacement of the blind or visually impaired person.

### Prior art

Glasses for the blind or visually impaired, having electronic components on one or both the temples of the glasses, are known.

These electronic components comprise an optical sensor for detecting obstacles at a predefined distance.

The electronic components also comprise an alarm system, for example of the acoustic or tactile type, for alerting the blind or visually impaired person if the optical sensor should detect an obstacle in the direction of displacement.

The known temples for glasses have a number of drawbacks.

Firstly the electronic components are irremovably mounted on the temple and constitute an undesirable additional volume, increase the weight of the glasses and alter the form thereof.

Equally well, in the event of accidental falls or damage, the electronic components are not replaceable and the glasses must be completely replaced. Document US 2020/0271961 A1 discloses a eyewear that includes a frame supporting an optical element. The eyewear includes a tempie adjacent the first side of the frame. The temple includes a first portion adjacent the frame and a second portion releasably connected to the first portion. An electronic device is provided in the releasable second portion,

CN 209 137 266 U discloses a spectacles frame for blind and visually impaired.

The technical problem dealt with by the present invention is that of devising a temple for glasses intended for the blind or visually impaired which overcomes the aforementioned drawbacks, namely a temple which is able to perform the recognition of obstacles, without however creating an additional volume on the glasses and without increasing the weight or altering the form of the glasses, and which may be easily removed and is preferably interchangeable in the event of damage to the electronic components and is substantially able to overcome the limitations affecting the temples of the prior art.

### Summary of the invention

The idea forming the basis of the present invention is that of providing a temple for glasses intended for the blind or visually impaired which includes removable electronic components, said components being designed to form the structure of the temple, substantially without altering the form and size thereof, and at the same time perform electronic detection and signalling functions.

When the temple is applied to a frame of glasses the electronic components provide the glasses with advanced functions for recognizing and signalling obstacles.

However, if the temple is removed from the glasses it may be easily replaced on the glasses by a simple (non electronic) structural component and used to detect and signal obstacles in another context, for example being mounted on a walking stick for the visually impaired.

On the basis of the proposed solution described above, the technical problem is solved by a temple for glasses intended for the blind or visually impaired according to claim 1. The temple includes:
- an end portion, intended to be supported by a user's ear, and a fixing portion, intended to be fixed to a front frame of the glasses, wherein that
- the temple comprises a first component provided with an electromechanical connector, preferably a USB connector,
- the second component being provided with a fastening for the electromechanical connector of the first component, the fastening and the electromechanical connector being designed to form a structural connection between the first component and the second component,
- wherein the first component comprises the portion for fixing to the frame and the second component comprises the end portion of the temple, characterized in that the first component is provided with an electronic module comprising an optical sensor for detecting an obstacle in the direction of displacement of the user.

This embodiment is described, without a limiting meaning, with particular reference to the attached figures.

According to a possible embodiment, the fastening incorporates a USB socket and the electromechanical connector is a USB connector, and the socket and the electromechanical connector are designed to form an electrical connection. The second component may further incorporate a second electronic module comprising an actuator, preferably an electric motor or vibrator.

The first electronic module and the second electronic module are electrically connected if the fastening and the electromechanical connector are structurally connected together. Advantageously, the same structural connection used to connect the first and second components also performs the electrical connection of the first and second electronic modules.

Preferably, the second electronic module comprises a battery and at least one sensor, for example a temperature sensor and/or an oxygenation sensor and/or a neurological activity sensor and/or a vibration sensor operatively connected to the optical sensor, the functions of which are described below.

In a particularly preferred embodiment, the second component comprises a plate, and the plate is movable from an initial position, where it is superimposed on a surface of the second component, into an end position, where it is at a predefined angular distance from the surface, being preferably movable through angular steps at an increasing angular distance from the surface, the plate being mounted on a hinged support, preferably hinged with the surface, and the support further comprises the fastening for the connector. The hinged support is particularly useful for directing the sensor in a preferred detection direction.

In particular, in one embodiment, the second module comprises a profiled part intended to be coupled with retaining means, preferably elastic means, for mounting the second module on a walking stick for the blind or visually impaired or on a temple for conventional glasses, the surface being intended to remain coplanar with a surface of the walking stick or temple for conventional glasses or aligned along the stick, and the plate being able to be angularly spaced from the stick, so as to position the optical sensor in a direction of walking movement of the visually impaired person.

The mounting of the first component on the temple may be also realized by simple means, for example quick-fitting means. For example, the first component comprises a seat for snap-engagement of a profile of the glasses frame, and the seat comprises an opening from which a portion of the snap-engaged profile protrudes, the portion comprising form-memory elastic means designed to prevent the profile from coming out of the seat, in the rest condition, or allow the profile to come out of the seat, when compressed.

According to a possible embodiment, not shown, the first component comprises the end portion and the second component comprises the fixing portion.

The aforementioned technical problem is therefore solved by glasses comprising at least one temple, preferably two temples, of the type described above.

Further characteristic features of the temple for glasses and of the glasses for the blind or visually impaired according to the present invention will become clear from a number of embodiments provided solely by way of a non-limiting example with reference to the attached drawings.

### Brief description of the attached drawings

Figure 1 is a top plan view of a temple for glasses and of glasses for the visually impaired according to the present invention, with parts separated.
Figure 2 is a side view of the temple for glasses and the glasses according to Figure 1.
Figure 3 is a side view of a temple for glasses and of glasses for the visually impaired according to a variation of embodiment of the present invention, with parts separated.
Figure 4 is a top plan view of the temple for glasses and the glasses according to Figure 3.
Figure 5 is a top plan view of a temple for glasses and of glasses for the visually impaired, with parts separated, according to another variation of embodiment of the present invention.
Figure 5a is a side view of a detail of an embodiment of a first component of the temple according to Figure 5.
Figure 5b is a side view of another embodiment of the first component of the temple according to Figure 5
Figure 5c is a side view of the front-piece of glasses according to the present invention.
Figure 5d is a side view of a detail relating to a system for fastening together the front-piece according to Figure 5c and the first component of the temple according to Figure 5a or 5b.
Figures 6a-6c are side views of three embodiments of the second component of glasses according to the present invention.
Figure 7 shows enlarged details of the system for fastening together the front-piece according to Figure 5c and the first component of the temple according to Figure 5a or 5b.
Figure 8 is a side view of the first component of the present invention.
Figure 9 is a side view of a temple of the glasses according to the prior art.
Figure 10 is a side view of a temple of the glasses and of the first component mounted on the temple, according to a first joining method according to the present invention.
Figure 11 is a top plan view of the first component of the present invention.
Figure 12 is a top plan view of a temple of the glasses without the first component.
Figure 13 is a top plan view of the temple of the glasses and the first component mounted on the temple, according to a second joining method.
Figure 14 is a front view of the glasses according to the present invention.
Figure 15 is a side view of a portion of a walking stick for the visually impaired and of the second component mounted on the stick, according to a second joining method.
Figures 16a and 16b are, respectively, a side view and a top plan view of the first component of the present invention.
Figures 16c and 16d are, respectively, a side view and a top plan view of the second component of the present invention.
Figures 17 and 17c are, respectively, a side view of the first and second components with parts separated and joined together.
Figures 17a and 17b are, respectively, a side view and a top plan view of the second component.
Figure 18 is a side view of the walking stick according to Figure 15 with the second component mounted on the stick and the first component, with parts separated.
Figures 18c and 18d are, respectively, a side view and a top plan view of the second component intended for the walking stick according to Figure 18.

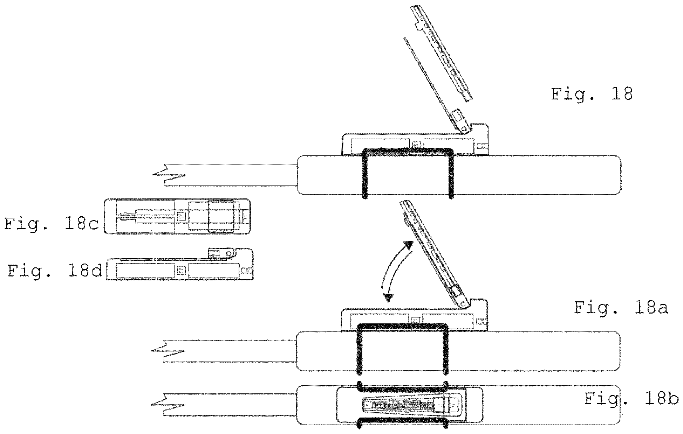

Figures 18a and 18b are, respectively, a view corresponding to the view of Figure 18, with parts assembled, and a top plan view of Figure 18a.

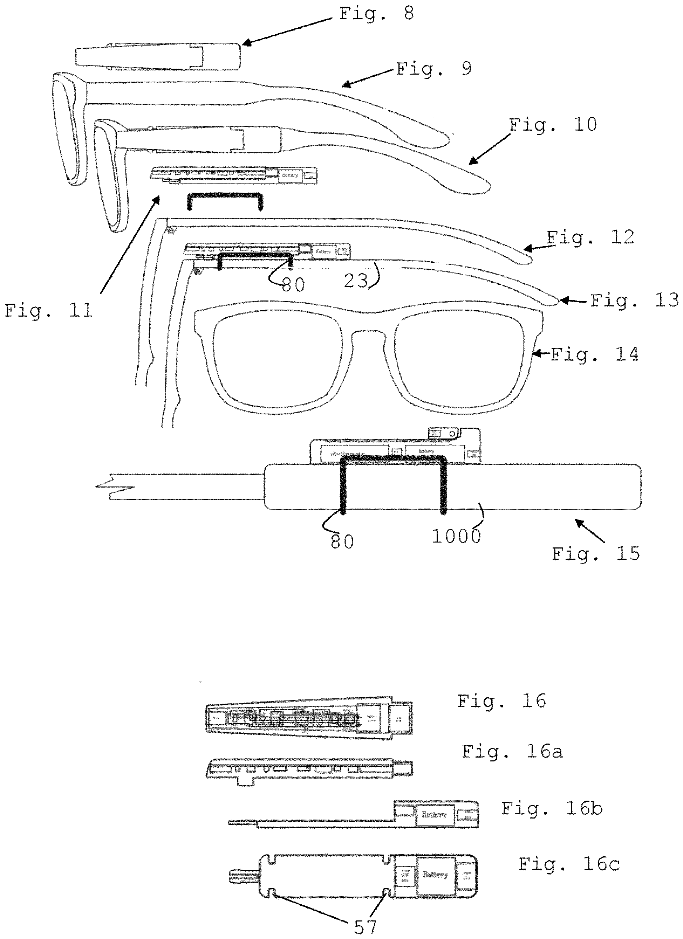

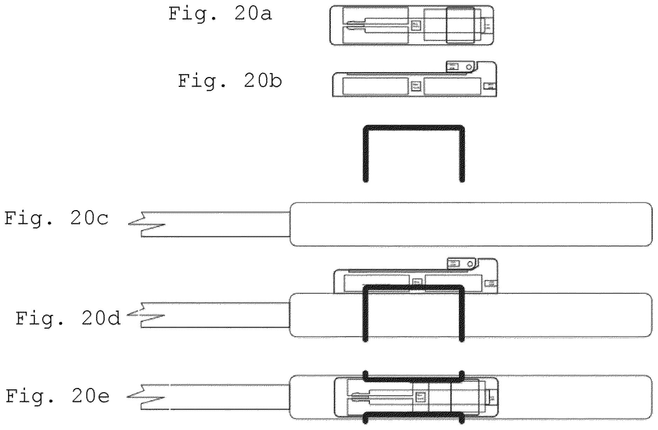

Figures 20a-20e show schematically the steps of mounting the second module on a walking stick of the type shown in Figure 15.

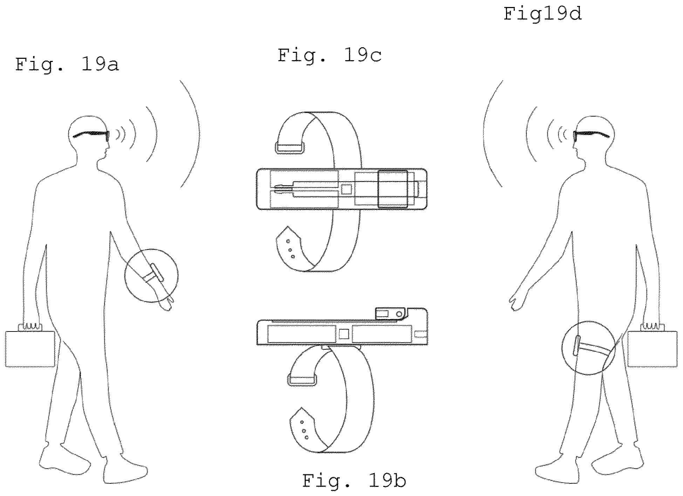

Figures 19a-19d illustrate schematically the steps of mounting the second module on a bracelet and the first module on glasses.

### Detailed Description

With reference to the attached figures a description is provided below of a temple for glasses intended for the blind or visually impaired according to the present invention and of associated glasses for the visually impaired and in particular a temple and glasses intended, during use, to detect the presence of an obstacle and signal the presence of the obstacle to the person using the glasses.

The technical means intended to perform detection and signalling are preferably, and respectively, an optical sensor and a vibration or acoustic device. For example, the optical sensor detects the presence of any obstacle based on the time lapsing between the emission of an optical signal and the reception of a respective signal reflected by the obstacle, said time being directly proportional to the distance of the obstacle. The vibration device (or similarly the acoustic device) and the optical sensor communicate electronically and the vibration device is designed to emit an alarm signal when the time detected by the optical sensor is less than a predetermined threshold, thus indicating the fact that an obstacle is too close.

The optical sensor is located on the temple of the glasses, as will become clear from the description below, essentially so as to detect obstacles within the amplitude of a solid angle having its origin substantially at the end of the temple which terminates in the front-piece of the glasses and pointing direction corresponding to the direction of extension of the said temple.

As will again be clear from an embodiment provided in the description below, this pointing direction of the temple may be varied in order to vary the solid detection angle.

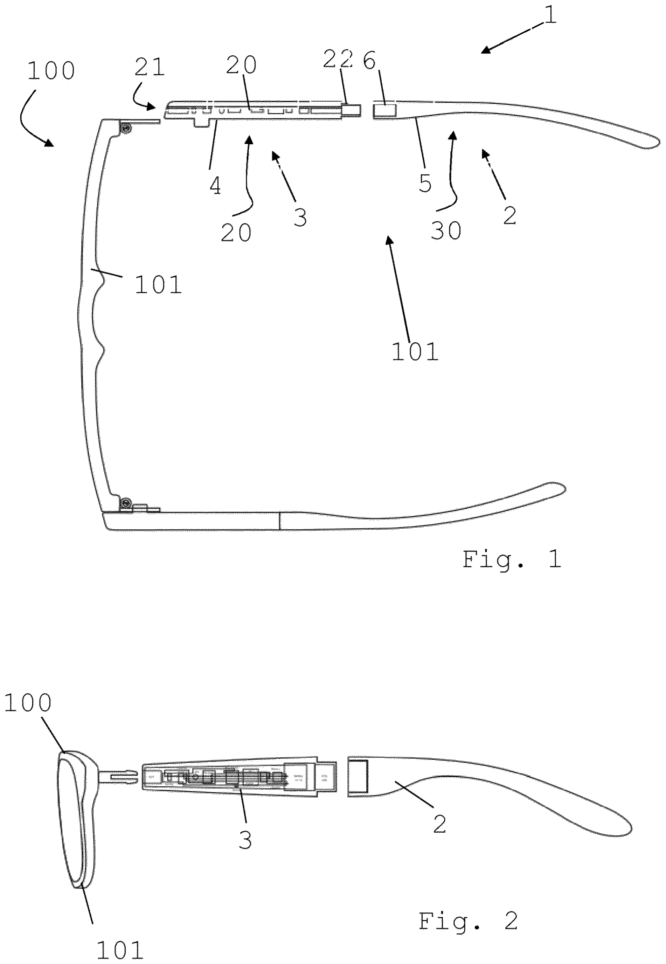

In Figure 1, the temple is indicated by the reference number 1 and is the temple for glasses 100 intended for visually impaired persons.

The temple 1 comprises an end portion 2, intended to be supported by a user's ear, being partially curved around the ear, where it is normally lined with rubbery or plastic material for ensuring the comfort of the user.

The temple 1 also comprises a fixing portion 3, intended to be fixed to a front frame 101 of the glasses 100, by means of a hinge which allows the temple to be folded down towards the front-piece 101 in order to close the glasses or to be pulled out from the front-piece 101 in order to open and use the glasses.

The plate 1 comprises a first component 4 provided with a first electronic module 20 comprising an optical sensor 21. The first component 4 is also provided with an electromechanical connector 22, preferably a USB connector.

The temple 1 also comprises a second component 5 provided with a fastening 6 for the electromechanical connector 22 of the first electronic module 20.

The fastening 6 and the electromechanical connector 22 are designed to form a removable structural connection between the first component 4 and the second component 5, and either one of the first component 4 and the second component 5 comprises the fixing portion 3 for fixing to the frame 101 and the other one of the first component 4 and the second component 5 comprises the end portion 2 of the temple 1.

For the sake of simpler illustration, the following description is provided with reference to an embodiment in which it is the first component 4 which comprises the fixing portion 3 and the second component 5 which comprises the end portion 2. This embodiment is preferred because it allows the optical sensor 21 to be positioned in the front part of the glasses, where the view for detecting obstacles is optimal.

However, the invention does not exclude embodiments where it is the first component 4 which comprises the end portion 2 of the glasses, in which case the optical sensor 21 is located on the end portion 2. In this embodiment also, in fact, it is possible to provide means for supporting the optical sensor 21 which allow the sensor 21 to be extended into a broader viewing position.

Still with reference to Figure 1, instead, it should be pointed out that the first component 4 may also comprise a second electronic module (not shown), for example provided with tactile and acoustic signalling means, in order to signal the obstacle to the user, such as a vibration motor or an acoustic emitter. In this case, the second component 5 would be substantially without electronic modules and would only realize the structural connection with the first component 4 in order to form the temple 1.

The first component 4 is removably associated with a support hinged with the front-piece 101 of the glasses and may be replaced with a component without electronic modules (not shown), in the case where the user is no longer interested in being able to detect obstacles. In this case, the replacement component and the second component 5 may form the body of the temple 1, in particular the body of a temple 1 for conventional glasses (namely glasses without detection and signalling means) and would allow use again of the first component 4 and the associated first (and optionally second) electronic module in another way, for example on a walking stick for the visually impaired.

The first component 4 in particular is intended for connection to several external supports including for example a USB socket incorporated in a walking stick for the visually impaired. This example and other examples of use in relation to a walking stick for the visually impaired are provided with reference, for example, to Figure 15.

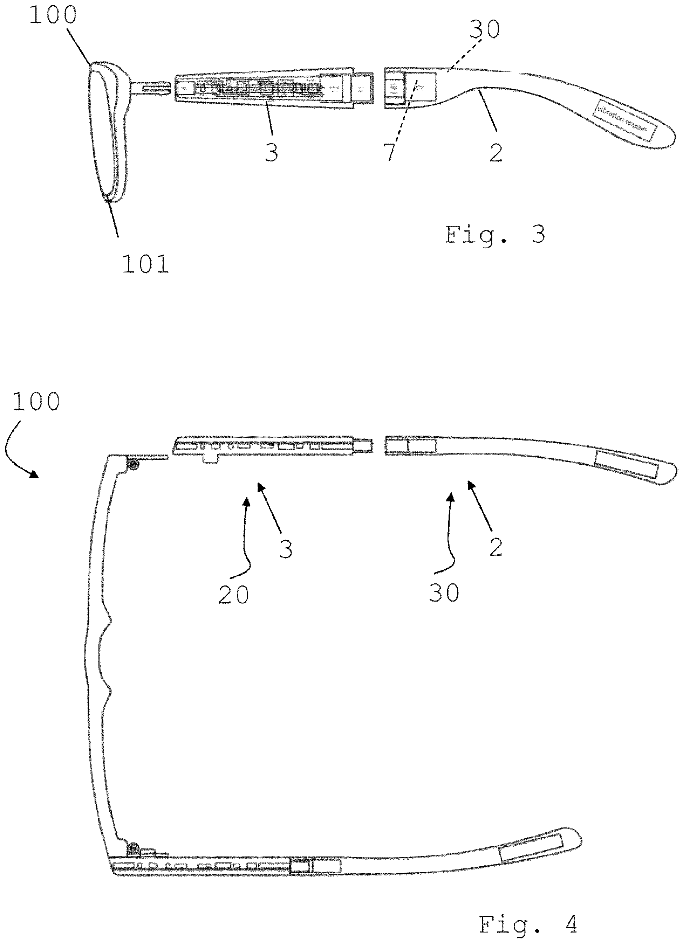

In the example of embodiment shown in Figures 3 and 4, instead, the second component 5 is provided with electronic components.

In particular, the fastening 6 incorporates a USB socket 7. The socket 7 and the electromechanical connector 22, specifically a USB connector, are designed to form an electrical connection. The second component 5 further incorporates a second electronic module 30 comprising an actuator, preferably an electric motor or vibrator; the first electronic module 20 and the second electronic module 30 are electrically connected if (i.e. when) the fastening 6 and the electromechanical connector 22 are structurally connected together.

This embodiment offers particular advantages owing to the fact that the first electronic module 20 and the second electronic module 30 may communicate by means of the USB interface and therefore via a physical/electromechanical and not a wireless connection. Moreover, the actuator may be positioned in the end part 2 which remains, during use, in close contact with the head of the blind or visually impaired person, close to the ear, where the sensitivity to vibrations and/or to sounds is very high.

According to various possible embodiments, power supply means, for example a rechargeable battery, may be provided in the first and/or second electronic module. If provided in only one of the modules, the power supply means supply power to both the modules, once the structural/electrical connection between the first and second component is formed.

The power supply means are rechargeable, in particular by means of connection of the electromechanical connector 22 or the USB socket 7 to a recharging system.

Only incidentally, the term "USB connector" or the term "USB socket" is provided in the present description with the intention of including also corresponding variants, such as a mini USB connector or mini USB socket. The term "electromechanical connector" in particular includes any connection of the structural and electrical type.

Even though the description above has been provided with reference to an optical sensor of a temple, according to an embodiment in any case included in the present invention, both the temples 1 of the glasses may be provided with optical sensors and actuators, for example in the respective first component 4 and second component 5. Advantageously, in this case, obstacles on both sides of the body of the visually impaired person may be signalled by activating the actuator on the left-hand temple for obstacles situated (detected) on the left, the actuator on the right-hand temple for obstacles situated on the right or both the actuators for obstacles situated in front.

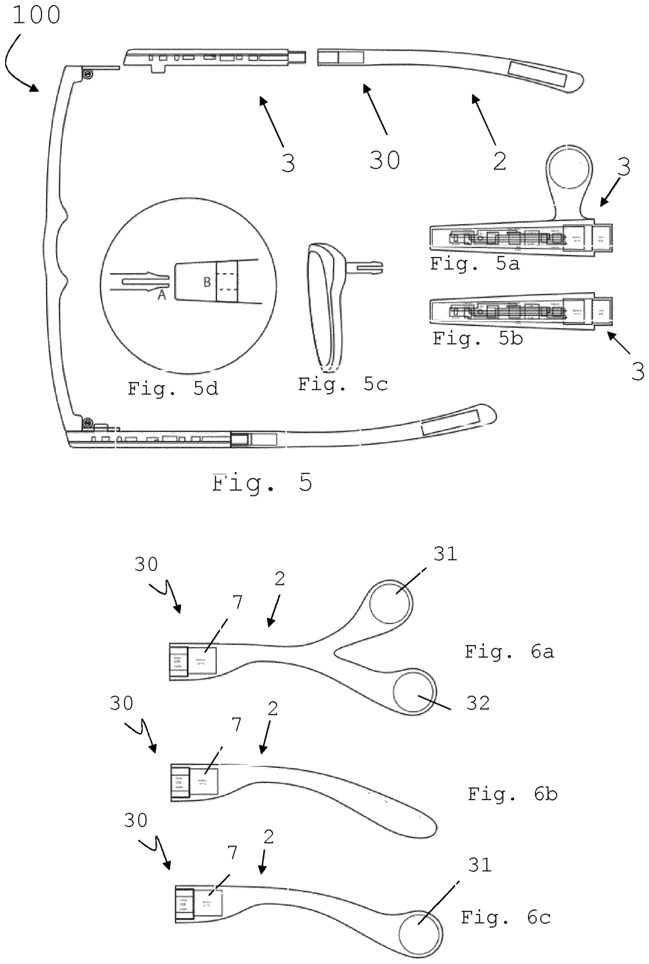

Figures 5a-5d and 6a-6c show some details of various embodiments of the first component 4 and second component 5.

In Figure 5a the first component 4 incorporates a sensor, for example a diagnostic sensor. This sensor extends vertically from the temple 1 of the glasses and is designed to remain in contact with the side wall of the skull in order to detect tremors. A memory integrated in the sensor or the first electronic module 20 stores the information associated with any tremors in relation to the detection time and may form an important instrument for diagnosing neuronal problems. This information may be easily downloaded from the first electronic module 20, this module 20 being provided with the USB interface and therefore being readable like a known USB pen drive. Furthermore, the sensor shown in Figure 5a may be a temperature or oxygenation sensor, in particular useful for the constant monitoring of the state of wellbeing of the user.

The aforementioned sensor may also or alternatively be located on the second electronic module 30, namely the module 30 mounted on the second component 5. In Figure 6a, the second component 5 (i.e. the respective electronic module 30) is provided with two different sensors which detect different parameters of the user separately. The second component 5 in Figure 6b is not provided with sensors, while the second component 5 in Figure 6c is provided with a single sensor which, however, does not extend vertically from the temple, but is located on its end part, where the contact with the user's head, substantially behind the ear flap, is good.

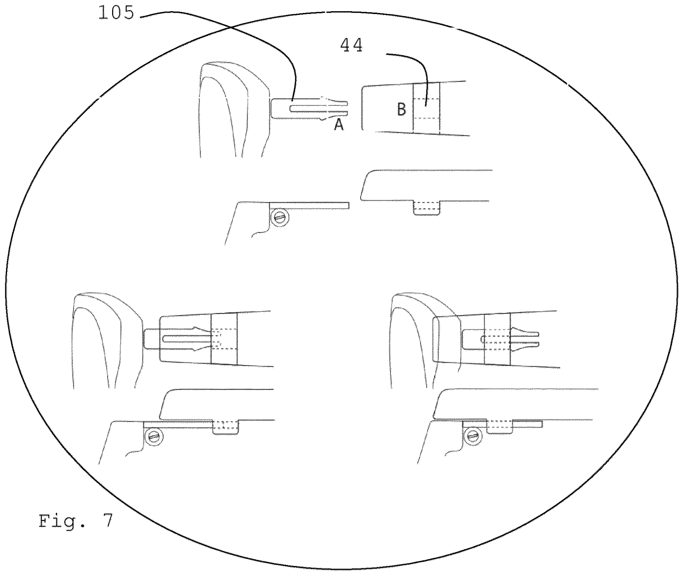

Figure 7 shows in schematic form the detail of a system for fastening together the first component 4 of the temple (side B) and the front-piece of the glasses (side A). The first component 4 comprises a seat 44 for snap-engagement of a profiled part 105 of the frame of the glasses. The profiled part 105 consists for example a peg.

The seat 44 comprises an opening from which the profiled part 105, snap-engaged inside the seat 44, may protrude. The portion of the profiled part 105 is for example a larger-diameter section of the peg, this section being formed by two prongs of the peg which, during insertion inside the seat 44, are moved closer together so as to pass through the seat 4 and then, once insertion is completed, are released and spaced apart again, thus locking the peg inside the seat 44. The peg may be used both as form-memory elastic means designed to prevent the profiled part 105 from coming out of the seat 44, in the rest condition, or to allow the peg to come of the seat 44, when compressed.

With reference to Figures 11-15, 18-18d and 19a-19d and 20a-20e examples of use of the first component 4 and the second component 5 are provided.

In Figure 8, the first component 4 and the second component 5 are shown assembled together. Figure 9 shows conventional glasses, namely glasses without electronic modules 20, 30 (and associated components 4, 5). Figure 10 shows the glasses according to Figure 9, once the temple thereof has been replaced by a temple 1 according to the present invention, for example by means of the fastening system shown in Figure 7.

Figure 11, instead, shows in schematic form the first component 4 and the second component 5 which are again shown assembled together. Figure 12 shows again conventional glasses, i.e. glasses without electronic components. Figure 13 shows the glasses according to Figure 12, once the first module and the second module in Figure 11 have been mounted on the temple thereof. Said mounting operation is performed using elastic means which pass around the temple and around the profiled portion 57 of the second component 5, as shown in Figure 16c. In this example, it is the second component 5 which is provided with a peg which can be inserted inside a seat of support hinged together with the front-piece of the glasses, thus forming a fastening system. The first component 4 is fitted together with the second component again by means of a socket/USB connector joining system. The profiled portion 57 is provided with a surface comprising two pairs of recesses located on opposite sides of the surface of the profiled portion, inside which an elastic element is passed, this elastic element also passing around the temple, as shown in Figure 13. The same type of joining system for the first component 4 and the second component 5 described in connection with the temple and Figure 13 may be used to mount the first component 4 and the second component 5 on a walking stick for the visually impaired, as shown in Figures 15, 18, 18a-18b, 20a-20e.

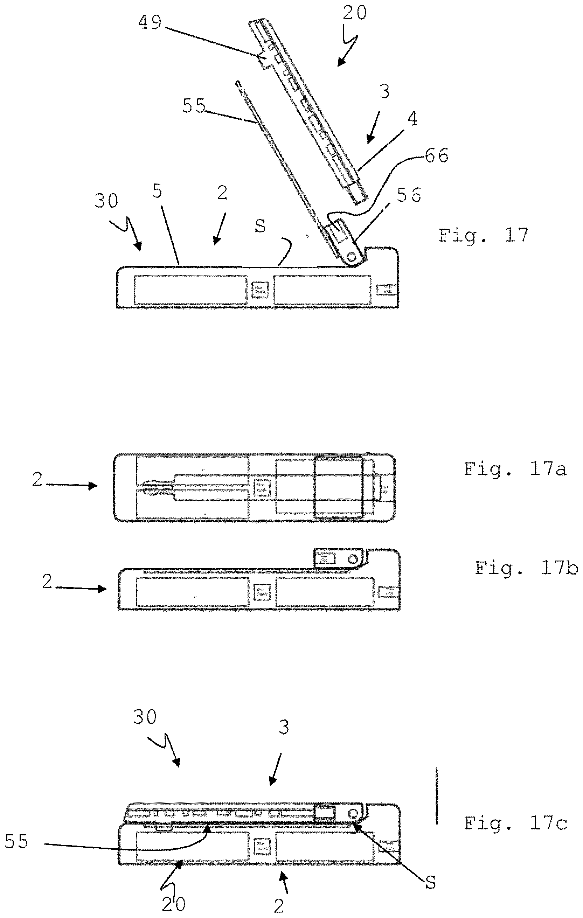

The system for joining together the first component 4 and the second component 5 may consist of an adjustable hinged system of the type described with reference to Figures 17-17c.

In particular, the second component 5 may comprise a plate 55, the plate 55 being movable from an initial position, where it is superimposed on a surface S of the second component 5, into an end position, where it is at a predefined angular distance from the surface S. Preferably the plate 55 is movable through angular steps at an increasing angular distance from the surface S. For example, the plate 55 is mounted on a hinged support 56, preferably hinged with the surface S. The support 5 further comprises the fastening 6 (or other fastening 66) for the connector 22.

The surface S extends along the longitudinal direction of the temple 1.

During use of the temple 1 on the glasses, the plate 55 is in the initial position and therefore extends in the longitudinal direction of the temple 1, without occupying space. The first component 4 is mounted on the second component 5, with the electromechanical connector 22 inserted inside the fastening 6 of the hinged support 56.

If the temple 1 is removed from the glasses, for use on a walking stick for blind and visually impaired persons, the plate 55 is positioned at a predefined angular distance from the surface S. In this case, the first component 4, mounted on the second component 5, with the electromechanical connector 22 inserted inside the fastening 6 on the hinged support 56, is positioned at a predefined angular distance from the surface S.

In Figure 17, the first component 4 and the second component 5 are shown with reference to the temple 1 of the glasses. However, these components 4 and 5 may be configured to form the end portion 2 of the temple and the fixing portion 3 of the temple in accordance with that stated in Claim 1.

For example, the first component 4 is provided with the first electronic module 20 comprising the optical sensor 21 and comprises the electromechanical connector 22, and the second component 5 is provided with a fastening 6 (66) for the electromechanical connector 22. The fastening 6 and the electromechanical connector 22 are designed to form the structural connection between the first component 4 and the second component 5, where the first component 4 comprises the fixing portion 3 (not shown) for fixing to the frame 101 of the glasses and the second component 5 comprises the end portion 2 (not shown) of the temple 1. The fastening 6 may be the fastening 66 formed on the support 56 of the plate 55.

Namely, the first component 4 may be provided with a part of a system for engagement with the front-piece of the glasses and the second component 5 may be provided with a rubber or plastic lining for ensuring the comfort of the user, even though they are not shown in the Figures.

Advantageously, however, when the first component 4 and the second component 5 are detached from the glasses, they may be directed in a variable manner with respect to each other. In particular, a surface S of the second component may remain coplanar with a surface of a walking stick or along the stick 1000, and the plate 55 may be arranged angularly spaced from the stick 1000, so that the optical sensor 21 is positioned in a direction of walking movement of the impaired person, as shown in Figure 18a. In other words, while the walking stick is directed downwards so as to rest on the ground, the first component 4 may be angularly spaced from the stick (by means of the plate 55) so as to point in the direction of walking movement of the user.

Another possible use of the first component 4 and the second component 5, once they have been removed from the glasses, is shown with reference to Figures 19a-19d. The second component 5 may be mounted on a bracelet or on a leg band as shown in Figures 19c and 19b, for example by passing a strap of the bracelet or leg band inside a buckle situated on a surface S- of the second component 5, preferably a surface situated opposite the surface S. The first component 3 instead is mounted on the glasses as in the example of embodiment shown in Figure 1; in this case the end part 3 of the glasses may be formed by the second component 5.

Advantageously, according to the present invention, the temple for glasses is very versatile because it allows conventional glasses to be converted into glasses for the visually impaired provided with electronic means which, however, may be removed from the temple and used in combination with a walking stick for the visually impaired or with a bracelet.

## Claims

1. Temple (1) for glasses (100) for the blind or visually impaired, comprising an end portion (2), intended to be supported by a user's ear, and a fixing portion (3), intended to be fixed to a front frame (101) of the glasses (100), wherein the temple comprises:
- a first component (4) provided with an electromechanical connector (22), preferably a USB connector;
- a second component (5) provided with a fastening (6) for the electromechanical connector (22), said fastening (6) and said electromechanical connector (22) being designed to form a structural connection between the first component (4) and the second component (5);
wherein the first component (4) comprises the fixing portion (3) for fixing to the frame (101) and the second component (5) comprises the end portion (2) of the temple (1), **characterized in that**
the first component (4) is provided with an electronic module (20) comprising an optical sensor (21) for detecting an obstacle in the direction of displacement of the user.

2. Temple (1) according to Claim 1, **characterized in that** the fastening (6) incorporates a USB socket (7) and the electromechanical component (22) is a USB connector, the socket (7) and the electromechanical connector (22) being designed to form an electrical connection, the second component (5) further incorporates a second electronic module (30) comprising an actuator, preferably an electric motor or vibrator, said first electronic module (20) and said second electronic module (30) being connected electrically if the fastening (6) and the electromechanical connector (22) are structurally connected together.

3. Temple (1) according to Claim 2, **characterized in that** the second electronic module (30) comprises a battery and at least one sensor (31, 32), preferably a temperature sensor and/or an oxygenation sensor and/or a neurological activity sensor and/or a vibration sensor operatively connected to the optical sensor (21).

4. Temple (1) according to Claim 1, **characterized in that** the second component (5) comprises a plate (55), said plate being movable from an initial position, where it is superimposed on a surface (S) of the second component (5) extending along a longitudinal direction of the temple, into an end position, where it is at a predefined angular distance from the surface (S), the plate (55) being movable through angular steps at an increasing angular distance from the surface (S) and being mounted on a hinged support (56) hinged with the surface (S), said support (5) further comprising another fastening (66) for the electromechanical connector (22) or said fastening (6).

5. Temple (1) according to Claim 4, **characterized in that** the second module (5) comprises a profiled part (57) intended to be coupled with retaining means (80), preferably elastic means, for mounting the second module (5) on a temple (23) for conventional glasses or a walking stick (1000) for the visually impaired, said surface (S) being intended to remain coplanar with a surface of said temple (23) for conventional glasses or of the stick or aligned along the stick (1000), and said plate (55) being able to be angularly spaced from the stick (1000), so as to position the optical sensor (21) in a direction of walking movement of the blind or visually impaired person.

6. Temple (1) according to Claim 1, **characterized in that** the first component (4) comprises a seat (44) for snap-engagement of a profile (105) of the glasses frame, and said seat (44) comprises an opening from which a portion of the snap-engaged profile (105) protrudes, said portion comprising form-memory elastic means designed to prevent the profile from coming out of the seat (44), in the rest condition, or allow the profile to come out of the seat (44), when compressed.

7. Temple (1) according to Claim 1, **characterized in that** the first component (4) comprises the end portion (2) and the second component (5) comprises the fixing portion (3).

8. Glasses, comprising at least one temple, preferably two temples, according to one of Claims 1 to 7.

## Patentansprüche

1. Bügel (1) für Brillen (100) für Blinde oder Sehbehinderte, welcher einen Endabschnitt (2), welcher dazu vorgesehen ist, von einem Ohr eines Benutzers gehaltert zu sein, und einen Fixierungsabschnitt (3), welcher dazu vorgesehen ist, an einem vorderen Rahmen (101) der Brille (100) fixiert zu sein, wobei der Bügel umfasst:
- eine erste Komponente (4), welche mit einem elektromechanischen Konnektor (22) ausgestattet ist, vorzugsweise einem USB-Konnektor;
- eine zweite Komponente (5), welche mit einer Befestigung (6) für den elektromechanischen Konnektor (22) ausgestattet ist, wobei die Befestigung (6) und der elektromechanische Konnektor (22) dazu eingerichtet sind, eine strukturelle Verbindung zwischen der ersten Komponente (4) und der zweiten Komponente (5) zu bilden;
wobei die erste Komponente (4) den Fixierungsabschnitt (3) zu einem Fixieren an dem Rahmen (101) umfasst und die zweite Komponente (5) den Endabschnitt (2) des Bügels (1) umfasst, **dadurch gekennzeichnet, dass** die erste Komponente (4) mit einem elektronischen Modul (20) ausgestattet ist, welches einen optischen Sensor (21) für ein Detektieren eines Hindernisses in der Bewegungsrichtung des Nutzers umfasst.

2. Bügel (1) nach Anspruch 1, **dadurch gekennzeichnet, dass** die Befestigung (6) einen USB-Anschluss (7) umfasst und die elektromechanische Komponente (22) ein USB-Konnektor ist, wobei der Anschluss (7) und der elektromechanische Konnektor (22) dazu eingerichtet sind, eine elektrische Verbindung zu bilden, wobei die zweite Komponente (5) ferner ein zweites elektronisches Modul (30) einschließt, welches einen Aktuator umfasst, vorzugsweise einen elektrischen Motor oder Vibrator, wobei das erste elektronische Modul (20) und das zweite elektronische Modul (30) elektrisch verbunden sind, wenn die Befestigung (6) und der elektromechanische Konnektor (22) zusammen strukturell verbunden sind.

3. Bügel (1) nach Anspruch 2, **dadurch gekennzeichnet, dass** das zweite elektronische Modul (30) eine Batterie und wenigstens einen Sensor (31, 32) umfasst, vorzugsweise einen Temperatursensor und/oder einen Oxygenierungssensor und/oder einen neurologischen Aktivitätssensor und/oder einen Vibrationssensor, betriebsfähig verbunden mit dem optischen Sensor (21).

4. Bügel (1) nach Anspruch 1, **dadurch gekennzeichnet, dass** die zweite Komponente (5) eine Platte (55) umfasst, wobei die Platte von einer initialen Position, wo sie sich einer Fläche (S) der zweiten Komponente (5) überlagert befindet, welche sich entlang einer longitudinalen Richtung des Bügels erstreckt, in eine Endposition bewegbar ist, wo sie sich an einer vorbestimmten Winkeldistanz von der Fläche (S) befindet, wobei die Platte (55) durch Winkelschritte an einer sich erhöhenden Winkeldistanz von der Fläche (S) bewegbar ist und an einer gelenkigen Halterung (56) angebracht ist, welche an der Fläche (S) gelenkig angebracht ist, wobei die Halterung (5) ferner eine weitere Befestigung (66) für den elektromechanischen Konnektor (22) oder die Befestigung (6) umfasst.

5. Bügel (1) nach Anspruch 4, **dadurch gekennzeichnet, dass** das zweite Modul (5) einen profilierten Teil (57) umfasst, welcher dazu vorgesehen ist, mit Haltemitteln (80), vorzugsweise elastischen Mitteln, für ein Anbringen des zweiten Moduls (5) an einem Bügel (23) für herkömmliche Brillen oder einem Laufstock (1000) für Sehbehinderte gekoppelt zu sein, wobei die Fläche (S) dazu vorgesehen ist, mit einer Fläche des Bügels (23) für herkömmliche Brillen oder von dem Stock komplanar zu sein oder entlang des Stocks (1000) ausgerichtet zu sein, und wobei die Platte (55) in der Lage ist, von dem Stock (1000) winklig beabstandet zu sein, um so den optischen Sensor (21) in einer Bewegungslaufrichtung der blinden oder sehbehinderten Person zu positionieren.

6. Bügel (1) nach Anspruch 1, **dadurch gekennzeichnet, dass** die erste Komponente (4) einen Sitz (44) für ein Schnapp-Eingriff eines Profils (105) der Brillenrahmen umfasst, und wobei der Sitz (44) eine Öffnung umfasst, von welcher ein Abschnitt des Schnapp-Eingriff-Profils (105) absteht, wobei der Abschnitt ein elastisches Formgedächtnis-Mittel umfasst, welches dazu eingerichtet ist, zu verhindern, dass das Profil aus dem Sitz (44) rauskommt, in dem Ruhezustand, oder ermöglicht, dass das Profil aus dem Sitz (44) rauskommt, wenn komprimiert.

7. Bügel (1) nach Anspruch 1, **dadurch gekennzeichnet, dass** die erste Komponente (4) den Endabschnitt (2) umfasst und die zweite Komponente (5) den Fixierungsabschnitt (3) umfasst.

8. Brille, umfassend wenigstens einen Bügel, vorzugsweise zwei Bügel, nach einem der Ansprüche 1 bis 7.

## Revendications

1. Branche (1) pour lunettes (100) pour aveugle ou malvoyant, comprenant une portion d'extrémité (2), prévue pour être supportée par une oreille d'un utilisateur, et une portion de fixation (3), prévue pour être fixée à une monture avant (101) des lunettes (100), dans laquelle la branche comprend :
- un premier composant (4) pourvu d'un connecteur électromécanique (22), préférablement d'un connecteur USB ;
- un second composant (5) pourvu d'une attache (6) pour le connecteur électromécanique (22), ladite attache (6) et ledit connecteur électromécanique (22) étant conçus pour former une connexion structurelle entre le premier composant (4) et le second composant (5) ;
dans laquelle le premier composant (4) comprend la portion de fixation (3) pour la fixation à la monture (101) et le second composant (5) comprend la portion d'extrémité (2) de la branche (1),
**caractérisée en ce que** le premier composant (4) est pourvu d'un module électronique (20) comprenant un capteur optique (21) pour détecter un obstacle dans le sens de déplacement de l'utilisateur.

2. Branche (1) selon la revendication 1, **caractérisée en ce que** l'attache (6) incorpore une prise (7) USB et que le composant électromécanique (22) est un connecteur USB, la prise (7) et le connecteur électromécanique (22) étant conçus pour former une connexion électrique, le second composant (5) incorpore en outre un second module électronique (30) comprenant un actionneur, préférablement un moteur ou un vibreur électrique, ledit premier module électronique (20) et ledit second module électronique (30) étant connectés électriquement si l'attache (6) et le connecteur électromécanique (22) sont structurellement connectés ensemble.

3. Branche (1) selon la revendication 2, **caractérisée en ce que** le second module électronique (30) comprend une batterie et au moins un capteur (31, 32), préférablement un capteur de température et/ou un capteur d'oxygénation et/ou un capteur d'activité neurologique et/ou un capteur de vibration opérationnellement connecté au capteur optique (21).

4. Branche (1) selon la revendication 1, **caractérisée en ce que** le second composant (5) comprend une plaque (55), ladite plaque étant mobile depuis une position initiale, où elle est surimposée sur une surface (S) du second composant (5) s'étendant le long d'un sens longitudinal de la branche, dans une position d'extrémité, où elle se trouve sous une distance angulaire prédéfinie depuis la surface (S), la plaque (55) étant mobile à travers des étapes angulaires sous une distance angulaire croissante depuis la surface (S) et étant montée sur un support articulé (56) qui est articulé avec la surface (S), ledit support (5) comprenant en outre une autre attache (66) pour le connecteur électromécanique (22) ou ladite attache (6).

5. Branche (1) selon la revendication 4, **caractérisée en ce que** le second module (5) comprend une pièce profilée (57) visant à être accouplée au moyen de retenue (80), préférablement un moyen élastique, pour monter le second module (5) sur une branche (23) pour lunettes classiques ou une canne (1000) pour malvoyant, ladite surface (S) étant prévue pour demeurer coplanaire avec une surface de ladite branche (23) pour lunettes classiques ou de la canne ou alignée le long de la canne (1000), et ladite plaque (55) étant capable d'être espacée au plan angulaire de la canne (1000), afin de positionner le capteur optique (21) dans un sens de mouvement de marche de la personne aveugle ou malvoyante.

6. Branche (1) selon la revendication 1, **caractérisée en ce que** le premier composant (4) comprend un siège (44) pour l'engagement par pression d'un profilé (105) de la monture des lunettes, et ledit siège (44) comprend une ouverture depuis laquelle une portion du profilé (105) engagé par pression fait saillie, ladite portion comprenant un moyen élastique à mémoire de forme conçu pour empêcher le profilé de sortir du siège (44), dans l'état de repos, ou permettre au profilé de sortir du siège (44), lorsqu'il est comprimé.

7. Branche (1) selon la revendication 1, **caractérisée en ce que** le premier composant (4) comprend la portion d'extrémité (2) et que le second composant (5) comprend la portion de fixation (3).

8. Lunettes, comprenant au moins une branche, préférablement deux branches, selon l'une des revendications 1 à 7.
